# EUROPEAN PATENT APPLICATION

(11) **EP 4 623 669 A1**
(43) Date of publication of application: **01.10.2025**
(21) Application number: 25163408.5
(22) Date of filing: 13.03.2025
(51) Int. Cl.: A01D 89/00, A01B 63/10, A01B 63/108, A01D 41/10

(54) **AGRICULTURAL HARVESTING MACHINES**

(30) Priority: 26.03.2024 GB 202404308
(71) Applicant: AGCO International GmbH, 8212 Neuhausen am Rheinfall (CH)
(72) Inventor: BROCKMANN, Andreas, 87616 Marktoberdorf (DE); Tschirdewahn, Wilhelm, 87616 Marktoberdorf (DE); Walser, Magnus, 87616 Marktoberdorf (DE); Grötsch, Johannes, 87616 Marktoberdorf (DE)
(74) Representative: AGCO Intellectual Property Department

(57) **Abstract**

A harvesting attachment comprises a rotor having tines for processing of cut crop and a support wheel to each side of the harvesting attachment for supporting the harvesting attachment. A height adjustment system comprises to each side of the harvesting attachment a height adjustment actuator, a sensor adapted to detect and generate signals representative of a separation between the rotor and a ground surface and an electronic control unit in communication with each sensor. The electronic control unit is adapted to receive signals from each sensor indicative of the separation between the rotor and the ground surface, to interpret the signals from the sensors indicative of the separation between the rotor and the ground surface in line with a height adjustment strategy and to generate signals to actuate each height adjustment actuator in line with the height adjustment strategy.

## Description

### CROSS-REFERENCE TO RELATED APPLICATIONS

Not applicable.

### FIELD

The present invention relates to an improved agricultural harvesting machines, and, in particular, to improvements in the processing of cut crop by agricultural harvesting machines including forage harvesters by the use of a harvesting attachment height adjustment system for a harvesting attachment of an agricultural harvester and a control system for the use of such a height adjustment system.

### BACKGROUND

It is known to provide pick up devices having tines for agricultural harvesting machines enabling such machines to gather cut crop from the ground. The cut crop may be gathered by such agricultural harvesting machines for the purposes of creating fodder for animals or the production of biomass.

In a first arrangement, the crop is formed into windrows or swaths by a harvesting machine, for example a mower prior to collection or processing by an agricultural harvesting machine such as a loader wagon, baler or forage harvester.

However, within a field, as well as between fields on which the agricultural harvesting machine operates, the soil structure and soil load bearing capacity can vary greatly between having a very good load bearing capacity to having very poor load bearing capacity.

The agricultural harvesting machine should ideally gather as much crop from the ground as possible, while minimising collection of earth, soil, stones or other undesirable material considered to pollute the cut crop.

In relation to the harvested crop, it is desirable to avoid including contaminants that might degrade the quality of the feed or biomass to be produced. For example, fodder contamination leads to poorer fermentation conditions in the silo and to mould formation, a high raw ash content and reduced fodder intake by livestock, possible livestock diseases. Biomass contamination causes reduced gas yield in a biogas plant.

It is also highly desirable to avoid contaminants that may cause wear or damage to the agricultural harvesting machine for example greater wear on knives, shearbars, wear plates and other components. The tines of the pickup apparatus themselves suffer from increased wear if they are set too low. Additionally, if the tines are set too low, the tines may also cause damage to the turf.

If the distance between the ground and the tines is set too high, there is a risk that crops will remain on the field, thereby reducing the economic return to the farmer.

As such it is desirable that the distance between the tines of the pickup apparatus and the ground can be adjusted both to ensure a consistent harvesting process and to protect against damage to the agricultural harvesting machine.

As noted, the bearing capacity of the soil can change while working across a field. A very solid, dry and stable soil can suddenly turn into a very moist and soft soil. In this case, a pickup that has been set up properly for firm ground will sink deeper into the field. This will mean that a previously correct setting of the distance between the ground and the tines is no longer appropriate for the new conditions and the pickup runs the risk of picking up a large amount of dirt in addition to the crop.

It is known to provide a manually adjustable apparatus to control the setting of the distance between the ground and the tines. However, every time such an adjustment is required, for example in moving from a first field to a second field, this requires an operator to stop the agricultural harvesting machine, get out of the agricultural harvesting machine, adjust the working height as required, get back onboard the agricultural harvesting machine and proceed. Further this adjustment is of no use where the ground conditions suddenly change within a field or where a forthcoming change in the ground conditions is not immediately obvious to an operator.

Other advantages of the present invention will be apparent from the description below.

### BRIEF SUMMARY

According to a first aspect of the present invention, a harvesting attachment height adjustment system for a harvesting attachment of an agricultural harvester, in which the harvesting attachment comprises a rotor having tines for processing of cut crop and a support wheel to each side of the harvesting attachment for supporting the harvesting attachment, the height adjustment system further comprising to each side of the harvesting attachment a height adjustment actuator, a sensor adapted to detect and generate signals representative of a separation between the rotor and a ground surface and an electronic control unit in communication with each sensor and adapted to receive the signals from each sensor indicative of the separation between the rotor and the ground surface, to interpret the signals from the sensors indicative of the separation between the rotor and the ground surface in line with a height adjustment strategy and to generate signals to actuate each height adjustment actuator in line with the height adjustment strategy.

Preferably, the system further comprises a user input device in communication with the electronic control unit.

Preferably, the system further comprises a feeler skid attached to a hub of each support wheel.

According to a second aspect of the invention, a control system for controlling operation of one or more controllable components of a harvesting attachment height adjustment system, the control system comprising an electronic control unit being configured to: receive data indicative of a separation between a rotor of a harvesting attachment and a ground surface and data indicative of a target separation between the rotor of the harvesting attachment and the ground surface; determine, in dependence on the data indicative of a separation between the rotor of a harvesting attachment and the ground surface, a height adjustment strategy for adjusting the separation between the rotor of a harvesting attachment and the ground surface; and generate and output one or more control signals for controlling one or more operational components associated with the separation between the rotor of a harvesting attachment and the ground surface in dependence on the height adjustment strategy.

Preferably, the control system further comprises a user interface for the entry of the target separation between the rotor of the harvesting attachment and the ground surface.

Preferably, the one or more controllers are also configured to receive data from the user interface indicative of adjustments to the target separation between the rotor of the harvesting attachment and the ground surface.

Preferably, the electronic control unit is also configured to output one or more control signals to the user interface causing data indicative of the separation between the rotor of a harvesting attachment and the ground surface to be displayed on the user interface.

Preferably, the electronic control unit is also configured to receive data from the user interface indicative of a state of wear of tines of the rotor, and adjust the height adjustment strategy based on the data indicative of a state of wear of tines of the rotor when generating and outputting the one or more control signals for controlling the one or more operational components associated with the separation between the rotor of a harvesting attachment and the ground surface.

Preferably, the electronic control unit is also configured to receive data from the user interface indicative of a ground condition, and adjust the height adjustment strategy based on the data indicative of a ground condition when generating and outputting the one or more control signals for controlling the one or more operational components associated with the separation between the rotor of a harvesting attachment and the ground surface.

Alternatively, the electronic control unit is also configured to receive data indicative of a depth of penetration of each support wheel in the ground, and adjust the height adjustment strategy based on the data indicative of a depth of penetration of a support wheel when generating and outputting the one or more control signals for controlling the one or more operational components associated with the separation between the rotor of a harvesting attachment and the ground surface.

Preferably, the electronic control unit is also configured to output one or more control signals to the user interface causing data indicative of the depth of penetration of each support wheel to be displayed on the user interface.

A third aspect of the invention provides a method of controlling operation of one or more controllable components of a harvesting attachment height adjustment system, comprising the steps of: receiving data indicative of a target separation between a rotor of a harvesting attachment and a ground surface; determining, in dependence on the target separation between the rotor of the harvesting attachment and the ground surface, a height adjustment strategy for controlling the separation between the rotor of the harvesting attachment and the ground surface, the height adjustment strategy including an indication of the separation between the rotor of the harvesting attachment and the ground surface; and controlling one or more operational components associated with the harvesting attachment to adjust the separation between the rotor of the harvesting attachment and the ground surface in dependence on the height adjustment strategy.

A fourth aspect of the invention provides computer software comprising computer-readable instructions which, when executed by a processor, causes performance of a method in accordance with the third aspect of the invention to be performed on a harvesting attachment height adjustment system according to the first aspect of the invention.

A fifth aspect of the invention provides a non-transitory computer readable storage medium comprising the computer software of the preceding aspect of the invention.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The invention will now be described, by way of example only, with reference to the accompanying drawings, in which:
FIG 1 shows a schematic side view of an agricultural harvesting machine provided with a harvesting attachment in accordance with the present invention;
FIG 2 shows elements of the agricultural harvesting machine of FIG 1;
FIG 3 shows a control loop illustrating operation of elements of a control system for the harvesting attachment shown in FIGS 1 and 2; and
FIG 4 shows in schematic form elements of a control system for operation of the harvesting attachment height adjustment system for a harvesting attachment of an agricultural harvester.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

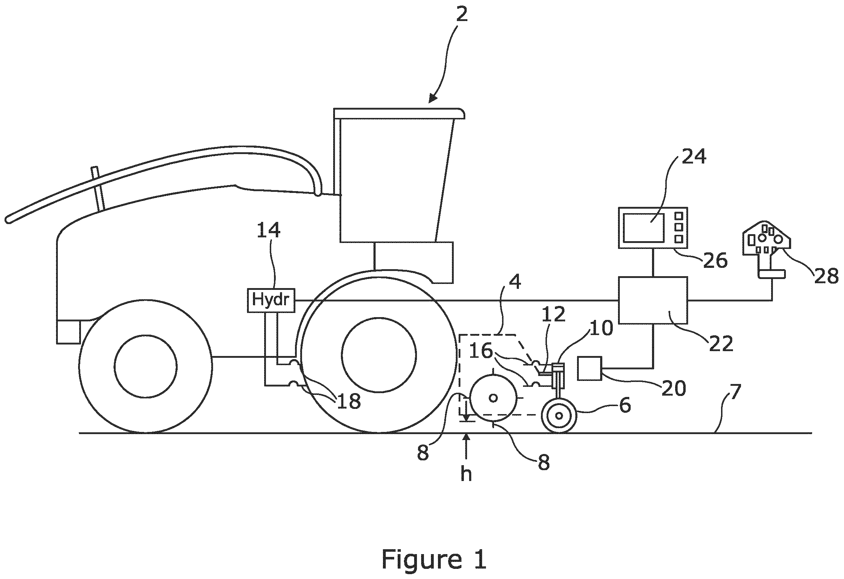

FIG 1 shows a schematic side view of an example agricultural harvesting machine 2. In the illustrated embodiment, the agricultural harvesting machine 2 is a forage harvester provided with a harvesting attachment 4 in the form of a pickup apparatus for lifting cut crop, such as grass or other stalk material, from a windrow or swath upon the ground and directing the cut crop into a suitable region of the agricultural harvesting machine 2. The pick up apparatus includes tines 8 mounted on a rotor for rotation about an axis, the tines lifting the cut crop from the windrow or swath and directing the cut crop into the agricultural harvesting machine 2.

The weight of the pickup apparatus is carried by hydraulic cylinders located on a frame of the harvesting machine and on support wheels 6. Each support wheel 6 is located clear of, but close to the tines 8 of the pickup apparatus of the harvesting attachment 4. A distance h is defined by a separation between a ground surface 7 and a first part of the harvesting attachment 4, for example, in the illustrated embodiment, the lower reach of the tines 8 of the rotor of the pickup apparatus. Alternatively, the distance h may be defined in relation to a separation between the ground surface 7 and a different part of the harvesting attachment 4, such as the axis of rotation of the rotor.

A linear actuator 10 is provided between a mounting for the support wheel 6 and a mechanical linkage 12. The mechanical linkage 12 is itself connected to a frame or housing of the harvesting attachment 4. Adjustment of the linear actuator 10 allows the tines 8 of the rotor of the pickup apparatus to be raised or lowered relative to the ground 7 and so adjust the distance h between the ground 7 and the tines 8.

Conveniently, the linear actuator 10 comprises a double acting hydraulic cylinder. In this arrangement, the linear actuator 10 is connected to a hydraulic control block 14 onboard the agricultural harvesting machine 2 via hydraulic lines 16,18. Alternatively, the linear actuator 10 can be provided as a single acting hydraulic cylinder or an electrically driven electric motor. In an alternative embodiment, the hydraulic control block 14 can be located on the harvesting attachment 4.

Conveniently, the pickup apparatus 4 is provided with a support wheel 6, linear actuator 10 and mechanical linkage 12 to each side of the pickup apparatus 4.

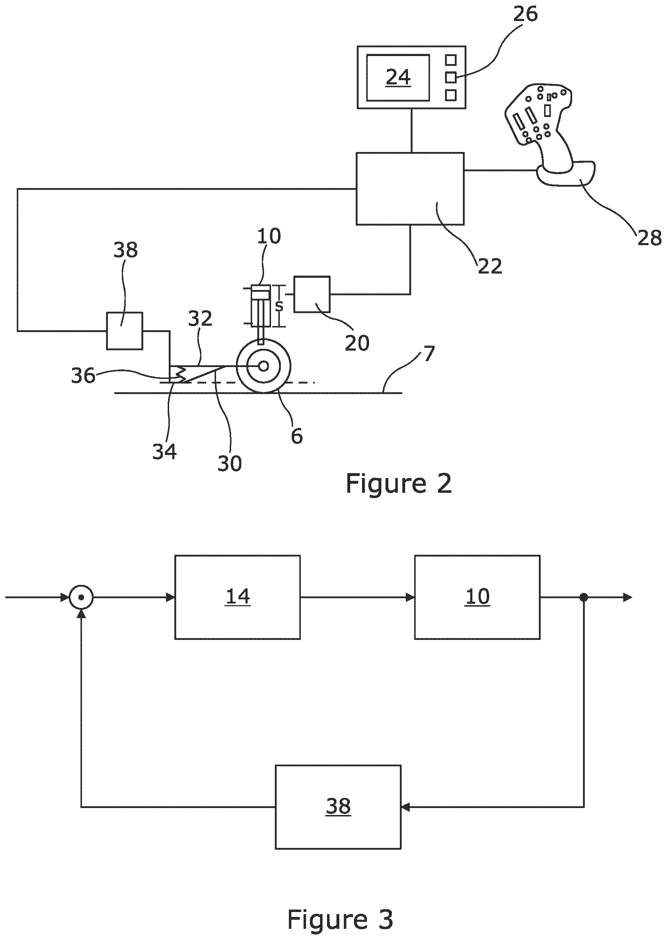

A displacement s (cf FIG 2) of the linear actuator 10 can be measured by an internal apparatus or, as illustrated, an external distance measurement apparatus 20. Conveniently, the displacement s can be measured steplessly. Conveniently, a suitable measurement apparatus 20 is provided for each linear actuator 10.

In an embodiment where the distance h is defined in relation to a separation between the ground surface 7 and a different part of the harvesting attachment 4, an external measurement apparatus 10 can be used to measure such separation.

An electronic control unit 22 is in electronic communication with each measurement apparatus 20. The electronic control unit 22 is also in electronic communication with a user interface device, the user interface device including a display screen 24 and a user input device 26. The display screen 24 may alternatively also be used as a user input device. Further, a drive lever 28 such as is typically present on agricultural harvesters such as forage harvesters, may also be used as an additional user input device (and will be understood also to be in electronic communication with the electronic control unit 22).

In practice, the electronic control unit 22 may comprise more than one processor, each processor being in electronic communication with one another.

The electronic control unit 22 is also in electronic communication with elements of the hydraulic control block 14.

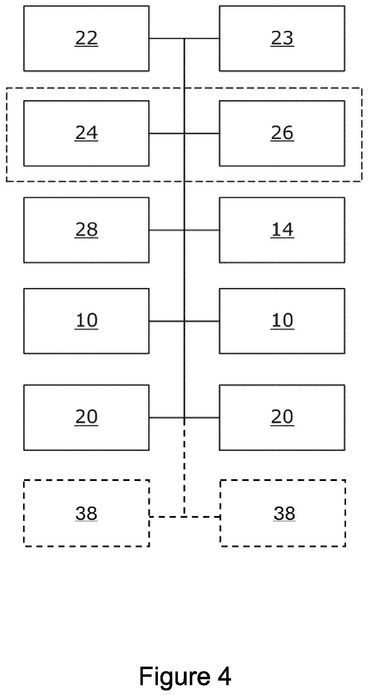

The electronic control unit 22 is provided with a memory unit 23 (FIG 4) and, as explained below is in electrical communication with a variety of sensors and other operational components. As will be explained, the electronic control unit 22 is operative to receive signals from the sensors, process these signals in accordance with instructions provided in the memory unit 23 and issue control signals in accordance with those instructions. Additionally, or alternatively, the electronic control unit 22 is operative to receive operator instructions input into a suitable machine user interface such as a touchscreen of the user input device 26 as user terminal signals, process these signals in accordance with instructions provided in the memory unit 23 and issue control signals to one or more operational components in accordance with those instructions.

To each side of the harvesting attachment, the geometric arrangement between the support wheels 6, the tines 8 and the linear actuators 10 is predefined and known. As such, once the displacement s of the linear actuator 10 is known, the separation h can be calculated. A routine for this calculation may be stored in the memory 23 and retrieved by the electronic control unit 22 as required. The electronic control unit 22 can instruct the user interface device to communicate to an operator the value of the separation h, for example, via a representation on the display screen 24.

If a normal value for the separation h is 2 cm, the operator may, as part of a height adjustment strategy, wish for this to be increased if the agricultural harvesting machine 2 is operating in a stoney field with freshly sown field grass. This may be achieved, for example, by the operator entering target values using the user input device 26. The electronic control unit 22 receives the signals from the user input device 26 and, in line with the requested target separation h, sends suitable control signals to an operational component associated with the separation h, namely the linear actuator 10, to cause the operational component to adjust the value of s to achieve the desired change in the separation h. The electronic control unit 22 may also send control signals to the user interface device to communicate in real time the changes in the value of the separation h to the operator, for example by way of a visual indication on the display screen 24.

In a further example, the electronic control unit 22 causes a menu to be displayed to an operator indicating options representing different stages of wear of the tines to be displayed. In a preferred embodiment, four such options are displayed: new - low wear - medium wear - wear limit. An operator causes one of these options to be selected in line with a desired height adjustment strategy and the electronic control unit 22 adjusts the calculation of the value of the separation h to account for the selected wear condition. The electronic control unit also sends control signals to instruct the user interface device to communicate the wear selection made, for example by an icon shown on the display screen 24.

In a further alternative, the electronic control unit 22 causes a menu to be displayed indicating options representing different kinds of ground condition. In a preferred embodiment, four such options are displayed: good; moderate; bad; very bad. An operator causes one of these options to be selected in line with a desired height adjustment strategy and the electronic control unit 22 adjusts the calculation of the value of the separation h to account for the selected ground condition and in particular how far the support wheel 6 is anticipated to sink into the ground (and so the anticipated change to the value of the separation h). The electronic control unit 22 also sends control signals to instruct the user interface device to communicate to the operator the ground type selection made, for example by an icon shown on the display screen.

Alternatively, a monitoring device is in electronic communication with the electronic control unit. The monitoring device is adapted to detect the degree to which the support wheel 6 is sinking into the ground. Use of such monitoring devices to each side of the pickup apparatus allows for different values of the separation h to each side of the pickup apparatus to be detected. For example, the monitoring device may comprise a feeler skid 30 attached to a hub of the support wheel 6.

In a preferred embodiment, the feeler skid 30 consists of a rigid bracket 32 and a movable bracket 34, a biasing means such as a spring 36 presses the movable bracket 34 down against the ground 7. The feeler skid 30 is arranged laterally next to the support wheel 6 in such a way that when the support wheel 6 sinks into the ground, the feeler skid 30 still rests on the ground. The spring 36 is dimensioned in such a way that the moveable bracket 34 always rubs on the ground without being pressed in. A displacement sensor 38 is mounted to detect the relative displacement of the rigid bracket 32 and the movable bracket 34. Conveniently, the displacement sensor 38 is mounted on the moveable bracket 34. The displacement sensor 38 is in electronic communication with the electronic control unit 22 through any suitable electronic communications network. Output signals from the displacement sensor 38 are electronically communicated to the electronic control unit 22.

With a device designed in this way, the sinking depth t and the separation h between the ground surface 7 and a first part of the harvesting attachment 4 can be measured and displayed at any time, taking into account the geometric relationships noted. The direct display of these values enables adjustment of one or both of the linear actuators 10 at any time using appropriate actuating elements in line with a desired height adjustment strategy determined by the operator.

A control loop can be set up according to FIG. 3 in which the predetermined desired value for the separation h between the ground surface 7 and a first part of the harvesting attachment 4 is constantly offset against the sinking depth t. If necessary, a control command for the valve block 14 is calculated in the electronic control unit 22, which then adjusts the linear actuator 10 and thus restores the desired separation h between the rotor of the harvesting attachment and the ground surface 7.

From reading the present disclosure, other modifications will be apparent to persons skilled in the art. Such modifications may involve other features which are already known in the field of forage harvesters and component parts therefore and which may be used instead of or in addition to features already described herein.

## Claims

1. A harvesting attachment height adjustment system for a harvesting attachment of an agricultural harvester, in which the harvesting attachment comprises a rotor having tines for processing of cut crop and a support wheel to each side of the harvesting attachment for supporting the harvesting attachment, the height adjustment system further comprising to each side of the harvesting attachment a height adjustment actuator, a sensor adapted to detect and generate signals representative of a separation between the rotor and a ground surface and an electronic control unit in communication with each sensor and adapted to receive the signals from each sensor indicative of the separation between the rotor and the ground surface, to interpret the signals from the sensors indicative of the separation between the rotor and the ground surface in line with a height adjustment strategy and to generate signals to actuate each height adjustment actuator in line with the height adjustment strategy.

2. A harvesting attachment height adjustment system according to claim 1, in which the system further comprises a user input device in communication with the electronic control unit.

3. A harvesting attachment height adjustment system according to claim 1 or claim 2, in which the system further comprises a feeler skid attached to a hub of each support wheel.

4. A control system for controlling operation of one or more controllable components of a harvesting attachment height adjustment system, the control system comprising an electronic control unit configured to: receive data indicative of a separation between a rotor of a harvesting attachment and a ground surface and data indicative of a target separation between the rotor of the harvesting attachment and the ground surface; determine, in dependence on the data indicative of a separation between the rotor of a harvesting attachment and the ground surface, a height adjustment strategy for adjusting the separation between the rotor of a harvesting attachment and the ground surface; and generate and output one or more control signals for controlling one or more operational components associated with the separation between the rotor of a harvesting attachment and the ground surface in dependence on the height adjustment strategy.

5. A control system according to claim 4, in which the control system further comprises a user interface for the entry of the target separation between the rotor of the harvesting attachment and the ground surface.

6. A control system according to claim 5, in which the electronic control unit is also configured to receive data from the user interface indicative of adjustments to the target separation between the rotor of the harvesting attachment and the ground surface.

7. A control system according to any of claim 5 or claim 6, in which the electronic control unit is also configured to output one or more control signals to the user interface causing data indicative of the separation between the rotor of a harvesting attachment and the ground surface to be displayed on the user interface.

8. A control system according to any of claim 5 to claim 7, in which the electronic control unit is also configured to receive data from the user interface indicative of a state of wear of tines of the rotor, and adjust the height adjustment strategy based on the data indicative of a state of wear of tines of the rotor when generating and outputting the one or more control signals for controlling the one or more operational components associated with the separation between the rotor of a harvesting attachment and the ground surface.

9. A control system according to any of claim 5 to claim 8, in which the electronic control unit is also configured to receive data from the user interface indicative of a ground condition and adjust the height adjustment strategy based on the data indicative of a ground condition when generating and outputting the one or more control signals for controlling the one or more operational components associated with the separation between the rotor of a harvesting attachment and the ground surface.

10. A control system according to any of claim 5 to claim 8, in which the electronic control unit is also configured to receive data indicative of a depth of penetration of each support wheel in the ground, and adjust the height adjustment strategy based on the data indicative of a depth of penetration of a support wheel when generating and outputting the one or more control signals for controlling the one or more operational components associated with the separation between the rotor of a harvesting attachment and the ground surface.

11. A control system according to claim 10, in which the electronic control unit is also configured to output one or more control signals to the user interface causing data indicative of the depth of penetration of each support wheel to be displayed on the user interface.

12. A method of controlling operation of one or more controllable components of a harvesting attachment height adjustment system, comprising the steps of: receiving data indicative of a target separation between a rotor of a harvesting attachment and a ground surface; determining, in dependence on the target separation between the rotor of the harvesting attachment and the ground surface, a height adjustment strategy for controlling the separation between the rotor of the harvesting attachment and the ground surface, the height adjustment strategy including an indication of the separation between the rotor of the harvesting attachment and the ground surface; and controlling one or more operational components associated with the harvesting attachment to adjust the separation between the rotor of the harvesting attachment and the ground surface in dependence on the height adjustment strategy.

13. Computer software comprising computer-readable instructions which, when executed by a processor, causes performance of a method according to claim 12 to be performed on a harvesting attachment height adjustment system according to any of claim 1 to claim 3.

14. A non-transitory computer readable storage medium comprising the computer software of claim 13.
